# EUROPEAN PATENT APPLICATION

(11) **EP 2 288 151 A1**
(43) Date of publication of application: **23.02.2011**
(21) Application number: 09749465.2
(22) Date of filing: 20.05.2009
(51) Int. Cl.: H04N 7/14

(54) **METHODS AND APPARATUSES FOR GENERATING CHANNEL INFORMATION, ACCESS CONTROLLING AND DELIVERING AND IPTV SYSTEM**

(30) Priority: 21.05.2008 CN 200810028216
(71) Applicant: Huawei Technologies Co., Ltd., Longgang District, Shenzhen Guangdong 518129 (CN)
(72) Inventor: ZHU, Wenming, Shenzhen (CN); QI, Baojian, Shenzhen (CN); SHI, Youzhu, Shenzhen (CN)
(74) Representative: Kreuz, Georg Maria
(86) International application number: PCT/CN2009/071886
(87) International publication number: WO 2009/140922

(57) **Abstract**

A channel information generation method, a channel access control method, a content delivery method, an Internet Protocol Television (IPTV) system, and apparatuses are disclosed. The channel information generation method includes: obtaining personalized channel matching parameters; and generating personalized channel information corresponding to a user according to the personalized channel matching parameters and IPTV content metadata accessible to the user. A personalized channel access control method includes: obtaining personalized channel information; generating, when a channel is accessed, content delivery instruction information according to the personalized channel information and the current time; and providing corresponding personalized channel media content to a User Equipment (UE) according to the content delivery instruction information. A personalized channel media content delivery method, a personalized channel information generation apparatus, a personalized channel access control apparatus, and a personalized channel media content delivery apparatus are also disclosed. The present invention simplifies the user operation, improves flexibility of channel access control, meets personalized requirements of the user, and improves user satisfaction.

## Description

This application claims priority to Chinese Patent Application No. 200810028216.3, filed with the Chinese Patent Office on May 21, 2008 and entitled "Channel Information Generation Method, Channel Access Control Method, Content Delivery Method, IPTV System and Apparatuses", which is incorporated herein by reference in its entirety.

### Field of the Invention

The present invention relates to channel management, and in particular, to a channel information generation method, a channel access control method, a content delivery method, and an Internet Protocol Television (IPTV) system and IPTV apparatuses.

### Background of the Invention

With the popularity of digital TV and IPTV, people enjoy rich-content resources. For example, nowadays a digital TV set usually provides more than 100 channels, and offers abundant programs such as news, entertainment, movies, teleplays, educational programs, and cartoons. The channel list displayed on a traditional Electronic Program Guide (EPG) interface is provided by a TV operator. A user does not necessarily like the programs available from a channel, but it is difficult to search a massive program library for a desired program. Consequently, different users are unable to set favorite programs and the TV service cannot meet the personalized requirements.

To meet personalized requirements of a user, IPTV (interactive web TV) enables the generating of personalized channels. That is, a man-machine interactive interface provides a portal for generating virtual channels, and the user selects desired programs manually through network search, EPG browse, and local content viewing, and maps the selected programs to the play time in the virtual channels.

After the programs in a virtual channel are determined, the programs are stored as personalized channel data in the IPTV User Equipment (UE). When the user browses the EPG, the personalized channel can be displayed as an ordinary program channel on the EPG page. The user selects to join this channel, and the IPTV UE requests the program corresponding to the current time from the network or the local program library, and displays the program on the screen.

However, in the prior art, for the purpose of generating a personalized channel, the user needs to use an extra tool for search, browse and sorting to edit the content of the personalized channel, and this brings causing complexity and inconvenience to user operations; meanwhile, any negligence during the edit may cause the user to miss a desired program, which impairs the user experience.

Besides, as regards access to the program content in a personalized channel in the prior art, the time of switching between programs in the personalized channel increases, which deteriorates the user experience.

### Summary of the Invention

In view of the defects in the prior art, the present invention provides a channel information generation method, a personalized channel access control method, a content delivery method and the relevant apparatuses, which can overcome inconvenience of manual edit of a user, improve flexibility of channel access control, and utilize resources fully.

As its first aspect the present invention provides a personalized channel information generation method, including:
obtaining personalized channel matching parameters; and
generating personalized channel information corresponding to a user according to the personalized channel matching parameters and IPTV content metadata accessible to the user.

Before generating the personalized channel information corresponding to the user according to the personalized channel matching parameters and the IPTV content metadata accessible to the user, the method further includes:
obtaining the IPTV content metadata accessible to the user.

As its second aspect the present invention provides a personalized channel access control method, including:
obtaining personalized channel information;
generating, when a channel is accessed, content delivery instruction information according to the personalized channel information and current time; and
providing corresponding personalized channel media content to a UE according to the content delivery instruction information.

As its third aspect the present invention provides a personalized channel media content delivery method, including:
obtaining content delivery instruction information that carries address information of personalized channel media content;
obtaining the corresponding personalized channel media content according to the address information of the personalized channel media content; and
transmitting the personalized channel media content to a UE through an established media channel.

As its fourth aspect the present invention provides a personalized channel generation apparatus, including:
a metadata obtaining unit, configured to obtain IPTV content metadata accessible to a user;
a matching parameter obtaining unit, configured to obtain personalized channel matching parameters; and
a personalized channel generation unit, configured to generate personalized channel information corresponding to the user according to the personalized channel matching parameters and the IPTV content metadata accessible to the user.

As its fifth aspect the present invention provides a personalized channel access control apparatus, including:
a delivery instruction information generation unit, configured to generate, when a channel is accessed, content delivery instruction information according to personalized channel information and current time; and
a delivery unit, configured to provide corresponding personalized channel media content to a UE according to the content delivery instruction information.

As its sixth aspect the present invention provides a personalized channel media content delivery apparatus, including:
a media channel establishing unit, configured to establish a media channel to a UE for the purpose of transmitting personalized channel media content;
a delivery instruction information receiving unit, configured to receive personalized channel delivery instruction information that carries address information of the personalized channel media content;
a personalized channel media content obtaining unit, configured to obtain the corresponding personalized channel media content according to the address information of the personalized channel media content; and
a transmitting unit, configured to transmit the personalized channel media content to the UE through the media channel.

An embodiment of the present invention provides an IPTV system, including:
a personalized channel generation apparatus, configured to: obtain IPTV content metadata accessible to a user, obtain personalized channel matching parameters, and generate personalized channel information corresponding to the user according to the personalized channel matching parameters and the IPTV content metadata accessible to the user;
a personalized channel access control apparatus, configured to: obtain the personalized channel information generated by the personalized channel generation apparatus, generate, when a channel is accessed, content delivery instruction information according to the personalized channel information and current time, and access corresponding personalized channel media content according to the content delivery instruction information; and
a personalized channel media content delivery apparatus, configured to: receive personalized channel delivery instruction information that carries address information of the personalized channel media content, obtain the corresponding personalized channel media content according to the address information of the personalized channel media content, and transmit the personalized channel media content to a UE through a media channel established with the UE.

In the present invention, the personalized channel matching parameters are obtained; and the personalized channel information corresponding to the user is generated according to the personalized channel matching parameters and the IPTV content metadata accessible to the user. In this way, the personalized channel information is generated automatically. In the present invention, personalized channel information may be obtained; when a channel is accessed, content delivery instruction information is generated according to the personalized channel information and the current time; and the corresponding personalized channel media content is accessed according to the content delivery instruction information, and the personalized channel media content corresponding to the current system time is obtained. In this way, the personalized channel is accessed. Further, in the present invention, a media channel is established with the UE for the purpose of transmitting personalized channel media content; content delivery instruction information is received; the corresponding personalized channel media content is obtained according to the address information of the personalized channel media content; and the personalized channel media content is transmitted to the UE through the media channel. In this way, the media content play can be switched between subchannels of the personalized channel quickly, and the user experience is improved. The present invention simplifies the user operations, improve flexibility of channel access control, utilize resources fully, meet personalized requirements of the user, and improve user satisfaction.

### Brief Description of the Drawings

FIG. 1 is a flowchart of a personalized channel information generation method according to an embodiment of the present invention;
FIG. 2 is a flowchart of a personalized channel access control method according to an embodiment of the present invention;
FIG. 3 is a flowchart of a personalized channel media content delivery method according to an embodiment of the present invention;
FIG. 4 is a flowchart of a personalized channel information generation method, an access control method, and a content delivery method according to a first embodiment of the present invention;
FIG. 5 is a flowchart of a personalized channel information generation method, an access control method, and a content delivery method according to a second embodiment of the present invention;
FIG. 6 is a flowchart of a personalized channel information generation method, an access control method, and a content delivery method according to a third embodiment of the present invention;
FIG. 7 is a flowchart of a personalized channel information generation method, an access control method, and a content delivery method according to a fourth embodiment of the present invention;
FIG. 8 shows an IPTV system according to an embodiment of the present invention;
FIG. 9 shows a personalized channel generation apparatus according to an embodiment of the present invention;
FIG. 10 shows a personalized channel access control apparatus according to an embodiment of the present invention; and
FIG. 11 shows a personalized channel media content delivery apparatus according to an embodiment of the present invention.

### Detailed Description of the Embodiments

To make the technical solution, objectives and merits of the present invention clearer, the following describes the embodiments of the present invention in more detail with reference to the accompanying drawings.

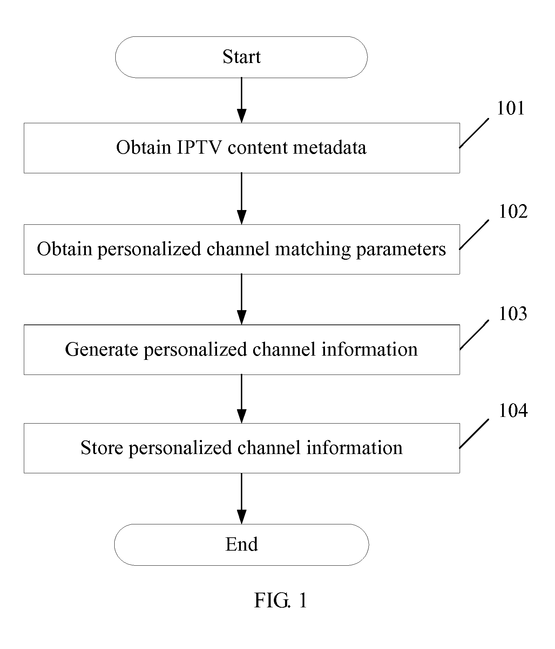

FIG. 1 is a flowchart of a personalized channel information generation method according to an embodiment of the present invention. The method includes the following steps:
101. Obtain IPTV content metadata accessible to the user. The IPTV content metadata is: IPTV content heading information, or play time information, or sorting information, or content identifier (ID) information, or access address information, or keyword information, or any combination thereof.
102. Obtain personalized channel matching parameters. The personalized channel matching parameters include: user data, or UE capabilities, or user states, or filter conditions, or any combination thereof.
   In practice, step 101 may occur before, during or after step 102. The user data includes IPTV subscription data of the user, or IPTV content preference data of the user, or user characteristic data, or any combination thereof. The user data includes a user ID. The IPTV subscription data indicates whether the user has subscribed to an IPTV live channel; the IPTV content preference data relates to preferences of the user, for example, whether the user prefers a certain type of IPTV program on demand; the user characteristic data like gender, age, and religious belief of the user.
   The UE capabilities include: audio and video coding and decoding supported by the UE, the geographic area of the UE, and bandwidth available for the UE to access the network.
   The user states include: online state such as online, offline, and invisible; user mood state such as happy, sad, and excited; and user health state such as healthy or handicapped.
   The filter conditions include: specifying certain types of programs as matched; specifying certain types of programs as not matched; specifying all programs in a certain time segment as not matched; and specifying all programs outside a certain time segment as not matched. Such filter conditions may be preset, or set by the user in real time through interactions.
103. Generate personalized channel information corresponding to a user according to the personalized channel matching parameters and IPTV content metadata accessible to the user. The personalized channel information is user ID, or personalized channel ID, or program schedule, or any combination thereof.
   The step of generating the personalized channel information corresponding to the user according to the personalized channel matching parameters and the IPTV content metadata accessible to the user is: sorting and matching the IPTV content metadata according to the matching parameters, and generating the personalized channel. The process of matching is: matching proper IPTV content with a time segment of the personalized channel according to the IPTV content metadata and the matching parameters, and generating a mapping relation between the content ID and the time segment. In this process, the time segment may be overlapped between different mapping relations, and gaps may exist between the time segments, depending on the matching algorithm.

The user ID is designed to identify the user corresponding to the current personalized channel. The user ID may be a public user ID, or an IPTV UE ID used by the user, for example, an IP address and a port.

The personalized channel ID is designed to identify the current personalized channel. It may be a logical or physical ID, and may be globally unique or locally unique, for example, the personalized channel ID is unique within the scope of the current user ID.

The program schedule arranges media content chronologically in the personalized channel (each piece of media content may be regarded as corresponding to a media source). Each piece of media content has a content ID. The program schedule includes information about the time segment corresponding to each content ID to indicate the play time of the channel corresponding to the content ID. The media content may come from a live channel, or from an on-demand program or other multimedia programs. The content ID may be a logical ID such as a Content Reference Identifier (CRID) or a TVID; or may be a physical ID such as a Uniform Resource Locator (URL) or a multicast address. The content corresponding to the content ID may be IPTV content, a local file, external multimedia, and so on. The time segment occupied by each content may have definite start and end points, which correspond to an interval on the absolute time axis of the personalized channel. For example, [2008-04-24T12:30:00.000Z, 2008-04-24T13:00:00.000] indicates half an hour from 12:30:00 to 13:00:00 on April 24, 2008.

Further, a part of the content corresponding to the content ID may be scheduled to indicate that the content played in the corresponding time segment is not the entirety of the content, but is a clip of the content, or further, indicate the control information such as the rate of playing content. For example, in the personalized channel, the time segment corresponding to the content ID "hero" is half an hour from the 15th minute to the 45th minute, and the more precise timestamp, frame number and subframe number are added to indicate the content that needs to be played in half an hour from 12:30:00 to 13:00:00 on April 24, 2008.

The personalized channel information may be encapsulated in the eXtensible Markup Language (XML) text format and carried in a protocol such as the Hyper Text Transfer Protocol (HTTP), Simple Object Access Protocol (SOAP), Diameter protocol, or Session Initiation Protocol (SIP).

As a practicable solution, the personalized channel information in the present invention may be expressed by the following XML schema:

```
    <xs:complexType name="tPChList">
       <xs:element name="PChId" type="xs:string" minOccurs="1"/>
       <xs:element name="PChExpiryTime" type="xs:dateTime" minOccurs="1"/>
       <xs:sequence>
            <xs:element name="PChItem" type="tPChItem" minOccurs="0"
 maxOccurs="unbounded"/>
       </xs:sequence>
    </xs:complexType>
    <xs:complexType name="tPChItem">
       <xs:sequence>
            <xs:element name="PChItemServiceType" type="tIPTVServiceTypeld"
 minOccurs="0"/>
            <xs:element name="PChItemContentId" type="tIPTVContentId"
 minOccurs=" 1"/>
            <xs:element name="PChItemStartTime" type=" xs:dateTime"
 minOccurs="0"/>
            <xs:element name="PChItemEndTime" type=" xs:dateTime"
 minOccurs="0"/>
            <xs:element name="PChItemOffset" type=" xs:string" minOccurs="0"/>
       </xs:sequence>
    </xs:complexType>
    <xs:simpleType name="tIPTVServiceTypeId" final="list restriction">
            <xs:restriction base="xs:unsignedByte">
                <xs:minInclusive value="0"/>
                <xs:maxInclusive value="1"/>
                <xs:enumeration value="0">
                    <xs:annotation>
                         <xs: do cumentation>
                             <label xml:lang="en">BCService</label>
                             <definition xml:lang="en">BC Service Type</definition>
                         </xs: documentation>
                    </xs: annotation>
                </xs: enumeration>
                <xs: enumeration value="1">
                    <xs:annotation>
                         <xs: do cumentation>
                             <label xml:lang="en">CoDService</label>
                             <definition xml:lang="en">Content-on-Demand Service
 Type</definition>
                         </xs: documentation>
                    </xs: annotation>
                </xs: enumeration>
                <xs:enumeration value="2">
                    <xs:annotation>
                         <xs: do cumentation>
                             <label xml:lang="en">PVRService</label>
                             <definition xml:lang="en">PVR Service
 Type</definition>
                         </xs: do cumentation>
                    </xs: annotation>
                </xs: enumeration>
                <xs:enumeration value="3">
                    <xs:annotation>
                         <xs: do cumentation>
                             <label xml:lang="en">UGCService</label>
                             <definition xml:lang="en">User Generated Content
 Service Type</definition>
                         </xs: do cumentation>
                    </xs: annotation>
                </xs: enumeration>
                <xs:enumeration value="4">
                    <xs:annotation>
                         <xs: do cumentation>
                             <label xml:lang="en">AdService</label>
                             <definition xml:lang="en">Advertising Service
 Type</definition>
                         </xs: documentation>
                    </xs: annotation>
                </xs: enumeration>
            </xs:restriction>
       </xs:simpleType>
    <xs:element name="tIPTVContentId">
            <xs:complexType>
                <xs:choice>
                    <xs:element name="BCService" type="tBCServiceID"
 minOccurs="0"/>
                    <xs:element name="CoDService" type="xs:string"
 minOccurs="0"/>
                    <xs:element name="PVRService" type="xs:string" minOccurs="0"
 />
                    <xs:element name="AdService" type="xs:string" minOccurs="0"
 />
                    <xs:element name="UGCService" type="xs:string" minOccurs="0"
 />
                </xs:choice>
            </xs:complexType>
       </xs:element>
```

The corresponding XML instance text may be expressed as:

```
    <PChList>
       <PChId>PCh2301 @cmcc.com</PChId>
       <PChExpiryTime>2010-01-0 1T0 1:02:03.000Z</PChExpiryTime>
       <PChItem>
            <PChItemSerivceType> BCService </PChItemSerivceType>
            <PChItemContentId>
                <BCService>BC_ID_002@cmcc.com</BCService>
            </PChItemContentId>
            <PChItemStartTime>2009-03-04T12:00:00Z/PChItemStartTime>
            <PChItemEndTime>2009-03-04T12:30:00:000Z</PChItemEndTime>
       </PChItem>
       <PChItem>
            <PChItemSerivceType> CoDService </PChItemSerivceType>
            <PChItemContentId>
                <CoDservice>CoD_111@cmcc.com</CoDService>
            </PChItemContentId>
            <PChItemStartTime>2009-03-04T13 :00:00.000Z</PChItemStartTime>
            <PChItemEndTime>2009-03-04T 15:30:00.000Z</PChItemEndTime>
            <PChItemOffset>npt=123.45s<PChItemOffset>
       </PChItem>
    </PChList>
```

In practice, the expression of the XML schema of the personalized channel information is not limited to the foregoing expression mode, and the format of the corresponding XML instance text may vary with the XML schema, but the content of the XML instance text is the same.

In practice, if the user expects to participate in the interactive operation to obtain personalized channel information more compliant with conditions, the user interactive operation may be added after step 103. That is, after generating the personalized channel information corresponding to the user according to the personalized channel matching parameters and the IPTV content metadata accessible to the user, the process may further include:
receiving an interactive operation command from the user, and editing the personalized channel information according to the interactive operation command.

104. Store the personalized channel information.

In this solution, "generating the personalized channel" does not refer to creating new IPTV content, but refers to collecting and sorting the existing accessible IPTV content, and displaying and accessing the content through a play list; "generating" or "generation" refers to allocating the time segments of playing each piece of IPTV content in this channel, namely, setting a program schedule of the personalized channel.

The personalized channel may be generated by the user manually, or generated by the UE or the network automatically, or generated semi-automatically through manual participation of the user.

Manual generation means that the user edits the personalized channel through tools such as retrieval, browse and sorting, and sets the time and sequence of playing the programs of the personalized channel manually.

Automatic generation of the personalized channel means that the network or the UE collects, sorts and matches the IPTV content metadata accessible to the specific user automatically according to the factors such as user data, user states, and UE capabilities, and therefore, one or more pieces of content of the channel are scheduled according to the determined time sequence, and each program of the channel occupies a specific time segment of play. In this process, the user does not need to operate the program in the channel, and only needs to send a generation request simply. For example, on an EPG interface browsed by the user, the user inputs a command through an input device or clicks "Generate a personalized channel", and then a successfully edited personalized channel appears on the interface. The content schedule is generated by a logic in the UE or network automatically, or even the personalized channel can be obtained without the generation request. For example, the user inputs no command and presses no key, but a personalized channel suitable for the user is already displayed on the EPG browsed by the user.

The semi-automatic generation mode of the personalized channel refers to adding the user interactive operation to the process of generating the personalized channel automatically so as to accomplish the personalized channel information more compliant with expectation of the user.

Depending on the time of the user interaction, the semiautomatic generation mode is sub-divided into the following modes:
Mode 1: An initial personalized channel is generated automatically first. The initial personalized channel carries at least the channel ID of the personalized channel, and may further carry an initial program schedule. After the initial personalized channel information is generated, the user may participate in the interactive operation to adjust the program, for example, delete program A, or move program B from one time segment to another time segment.
Mode 2: The user participates in the interactive operation first, and sets the corresponding filter conditions according to preferences or requirements. The personalized channel generation request carries the filter conditions and is sent to a generation logic unit. The generation logic generates the personalized channel automatically. For example, the user may set certain time segments as unavailable before going on a business trip, or may add keywords to set favorite programs.

The two modes above may be combined. That is, filter conditions are set first, and then the channel information is generated automatically, and finally, the program is adjusted to meet the expectation of the user.

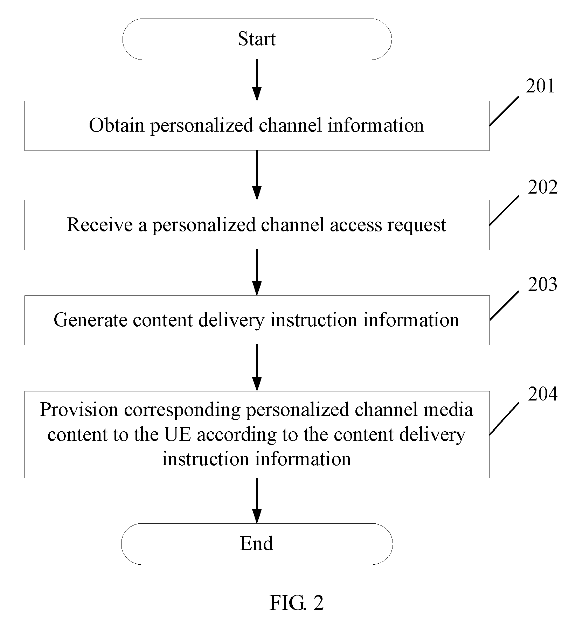

FIG. 2 is a flowchart of a personalized channel access control method according to an embodiment of the present invention. The method includes the following steps:
201. Obtain personalized channel information. The personalized channel information is all or part of the information about a specific personalized channel.
202. Receive a personalized channel access request.
   In practice, step 201 may occur before, during or after step 202, and step 202 is optional.
203. Generate, when a channel is accessed, content delivery instruction information according to the personalized channel information and current time.

When the user accesses a channel, the delivery instruction information is generated for different content in the personalized channel respectively. The delivery instruction information instructs delivery of the personalized channel media content according to the time sequence of playing content. In this embodiment, the generation of the content delivery instruction information may be triggered by the user operation, or triggered by time or any other event. For example, the user clicks a personalized channel link by pressing a key on the remote controller; the first program played after startup is a personalized channel by default, and the default program is preset by the user; or the channel switches to the personalized channel automatically when the favorite program of the user starts.

The content delivery instruction information carries address information of the personalized channel media content. The address information may be a multicast address or a unicast address of the media, an IP address and a port, or a routable Uniform Resource Identifier (URI).

The content delivery instruction information may further include:
codec information indicating the codec format applied to the personalized channel media content, for example, MPEG-4 or any other identifiable and usable codec format; or
segmental play information of the personalized channel media content, indicating that only one or more clips of the media content need to be played, for example, only the initial 10 minutes of the content; or
play rate information of the personalized channel media content, indicating whether the content is played normally, or played fast forward, or played slowly, or rewound, for example, playing the content fast forward at a 2.0× speed or rewinding the content at a -1.0 speed; or
content ID information of the personalized channel media content, identifying different content, for example, a CRID or any other URI; or
receiving address of the personalized channel media content, indicating the receiving location of the personalized channel accessing unit, for example, an IP address and a port, or any other routable URI; or
other content metadata of the personalized channel media content, displaying the director, sorting information, or price confirmed by the user;
or any combination thereof.

In this embodiment, the corresponding content delivery instruction information is generated in view of various possibilities. For example:

When programs are overlapped, namely, the time segment allocated to a program is not enough for completing play of this program, special processing is required.

The special processing includes: editing or splitting the current program properly, or quickening the play of the current program, or buffering or recording the current program or the next program to ensure that the user can watch all desired programs. If the program needs to be buffered or recorded, the content delivery instruction information may carry a command (such as "buffer" or "record") to be executed in the case of program overlapping, and may carry a content ID of the command execution object, for example, a CRID, or a TVID, or a multicast address.

Or, the personalized channel information is adjusted automatically for a temporary purpose. For example, the next program content in the channel is replaced with a new program compliant with the time segment setting, and the corresponding delivery instruction information is generated according to the replacement.

When an idle time segment exists between two programs or no program is allocated between them, special processing needs to be performed for the idle time segment. For example, a proper advertisement, or a clip of a new movie, or a small interactive game is inserted into the idle time segment, and the corresponding delivery instruction information is generated according to the processing result. For example, if an advertisement is inserted into the idle time segment, the delivery instruction information may carry the content ID or access address of the advertisement; if a clip of a new movie is inserted into the idle time segment, the delivery instruction information may carry the clip of the movie; or, if an interactive game is inserted into the idle time segment, the delivery instruction information may carry the address for downloading the game.

For other possible exceptions, for example, an exception indicating that specific personalized channel content is no longer available, the system needs to solve the exception automatically according to its own logics, or generate content delivery instruction information according to the exception and sends it to the personalized channel access control apparatus.

As a practicable example, the content delivery instruction information may be described through the following XML schema:

```
<xs:complexType name="PChControl">
       <xs:sequence>
            <xs:choice>
                <xs:element name="ItemSwitch" type="ItemSwitchCommandType"
 minOccurs="0"/>
                <xs:element name="PVR" type="PVRCommandType"
 minOccurs="0"/>
                <xs:element name="AdInsertion" type="AdinsertionCommandType"
 minOccurs="0"/>
            </xs:choice>
       </xs:sequence>
    </xs:complexType>
    <xs:complexType name="ItemSwitchCommandType">
       <xs:sequence>
            <xs:element name="UpcomingItem" minOccurs="0"
 maxOccurs="unbound">
                <xs:complexType>
                    <xs:attribute name="PChItemID" type="xs:string"
 use="required"/>
                    <xs:sequence>
                         <xs:element name="SwitchTime" type="xs:dateTime"/>
                         <xs:element name="ItemSourceURL" type="xs:string"
 minOccurs="0"/>
                         <xs:element name="ServiceType" type="xs:string"
 minOccurs="0"/>
                         <xs:element name="BCProgramID" type="xs:string"
 minOccurs="0"/>
                    <xs:sequence>
                </xs:complexType>
            </xs:element>
       </xs:sequence>
    </xs:complexType>
    <xs:complexType name="PVRCommandType">
       <xs:attribute name="PVRContentID" type="xs:string" use="required"/>
       <xs:sequence>
            <xs:simpleType name="PVRType">
                <xs:restrict base="xs:string">
                    <xs:enumeration value="NPVR"/>
                    <xs:enumeration value="CPVR"/>
                </xs:restrict>
            </xs:simpleType>
            <xs:element name="RecordStartDate" type="xs:dateTime"/>
            <xs:element name="RecordEndDate" type="xs:dateTime"/>
            <xs:element name="RecordOffset" type="xs:string"/>
            <xs:element name="BCSourceURL" type="xs:string" minOccurs="0"/>
            <xs:element name="BCServiceID" type="xs:string"/>
       </xs:sequence>
    </xs:complexType>
    <xs:complexType name="AdInsertionCommandType">
       <xs:sequence>
            <xs:element name="AdContentID" type="xs:string" />
            <xs:element name="AdResources">
                <xs:complexType>
                    <xs:sequence>
                         <xs:element name="AdType">
                             <xs:simpleType>
                                  <xs:restriction base="xs:string">
                                      <xs:enumeration value="Picture" />
                                      <xs:enumeration value="Video" />
                                      <xs:enumeration value="Text" />
                                      <xs:enumeration value="Application" />
                                  </xs:restriction>
                             </xs:simpleType>
                         </xs:element>
                         <xs:element name="AdLocation" type="xs:anyURI" />
                    </xs:sequence>
                </xs:complexType>
            </xs:element>
            <xs:element name="AdStartTimeStamp" type="xs:dateTime" />
            <xs:element name="AdEndTimeStamp" type="xs:dateTime" />
       </xs:sequence>
    </xs:complexType>
```

In the foregoing example, the PChControlType element describes content delivery instruction information. There are three types of delivery instructions:
(1) Content switching instruction (ItemSwitch): At the start of the next program, this instruction is delivered to switch the channel to the next program. The instruction includes one or more upcoming programs (UpcomingItem). Each program includes a content ID (PChItemID), time of switching to this program (SwitchTime), the service type of the program (ServiceType, such as live broadcast or content on demand), and source address information (ItemSourceURL) of the program.
(2) Program Video Recording (PVR) instruction: When two programs are overlapped or recording is requested by the user, Network PVR (NPVR) or Client PVR (CPVR) is performed, depending on the local policy of the network or the user selection. The operation instruction elements include the ID of the program to be recorded (PVRContentID), the beginning date of recording (RecordBeginDate) and the end date of recording (RecordEndDate), a recording offset (RecordOffset), and source information of the program to be recorded (BCSourceURL, BCServiceID).
(3) Advertisement insertion instruction (AdInsertion): This instruction intends to insert personalized advertisements into an idle time segment between two programs according to the conditions such as user preferences. This instruction includes an advertisement ID (AdContentID), advertisement resource description (AdResources, such as advertisement type "AdType" and advertisement source address "AdLocation"), start time of inserting the advertisement (AdStartTimeStamp), and end time of inserting the advertisement (AdEndTimeStamp).

Described above is an exemplary XML schema for describing the content delivery instruction information. The XML schema above does not include all possible content delivery instruction information (such as play rate). In practice, other XML schemas may be applied for the same purpose, namely, for describing the content delivery instruction information.

As an instance of the XML schema above, the content delivery instruction may be carried by the following XML text in a practical application:

```
    <PChControl>
       <ItemSwitch>
            <UpcomingItem PChItemID="BC_004@cmcc.com">
                <SwitchTime>20090101T123000Z</SwitchTime>
                <ItemSourceURL>MA:230.224.211.22</ItemSourceURL>
                <ServiceType>BC</ServiceType>
            </UpcomingItem>
       </ItemSwitch>
       <PVR PVRContentID="pvr_001@cmcc.com">
            <PVRType>NPVR</PVRType>
            <RecordStartDate>20090101T123000Z</RecordStartDate>
       <RecordEndDate>20090101T133000Z</RecordEndDate>
            <BCSourceURL>MA:230.224.211.21</BCSourceURL>
            <BCServiceID>BC_003@cmcc.com</BCServiceID>
       </PVR>
    </PChControl>
```

The XML text above includes two instructions: One is an instruction of switching to the BC_004@cmcc.com live channel at 12:30:00 on 2009-01-01, with the multicast address being 230.224.211.22; and the other instruction is to record the BC_003@cmcc.com live channel whose multicast address is 230.224.211.21 for one hour (from intraday 12:30:00 to 13:30:00) through NPVR, and save the record as a pvr_001@cmcc.com content ID.

As another instance of the XML schema above, the following text carries an advertisement insertion instruction for inserting an advertisement into an idle time segment between two programs:

```
    <PChControl>
       <AdInsertion>
            <AdContentID>ad_004@cmcc.com</AdContentID>
            <AdResources>
                <AdType>Video</AdType>
                <AdLocation>ftp://ad.cmcc.com/ftp/ad_004.avi</AdLocation>
            </AdResources>
            <AdStartTimeStamp>20090424T150000Z</AdStartTimeStamp>
            <AdEndTimeStamp>20090424T151000Z</AdEndTimeStamp>
       </AdInsertion>
    </PChControl>
```

In this case, the ID of the advertisement to be played is ad_004@cmcc.com, which indicates a video advertisement whose source address is ftp://ad.cmcc.com/ftp/ad_004.avi, and the advertisement time is 10 minutes starting from 15:00:00 on 2009-04-24.

The XML text above is only an example of the instantiated XML schema. In practice, the XML text may be described in different modes which are not limited, but intended for the same purpose, namely, the purpose of carrying the content delivery instruction information.

204. Provision the corresponding personalized channel media content to a UE according to the content delivery instruction information.

In practice, the step of providing the corresponding personalized channel media content to a UE according to the content delivery instruction information may be: sending the content delivery instruction information to the UE, where the UE accesses the media content at an address corresponding to the address information of the personalized channel media content.

The step of providing the corresponding personalized channel media content to a UE according to the content delivery instruction information may also be: sending the content delivery instruction information to a media server, where the media server sends the corresponding media content to the UE.

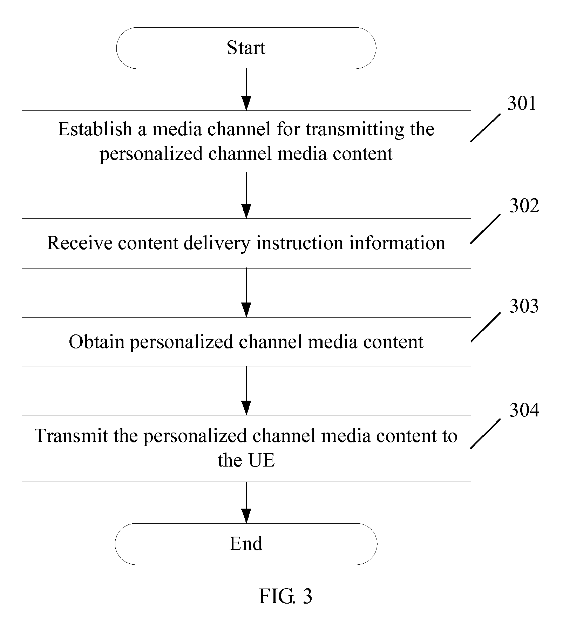

FIG. 3 is a flowchart of a personalized channel media content delivery method according to an embodiment of the present invention. The method includes the following steps:
301. Establish a media channel with the UE for the purpose of transmitting personalized channel media content.
   When the channel is accessed, the Network Element (NE) that implements the method herein (in the following description, the NE is a content delivery entity) performs signaling interactions with the UE to establish a media channel with the UE for the purpose of transmitting the personalized channel media content.
302. Receive content delivery instruction information that carries address information of the personalized channel media content.
303. Obtain the corresponding personalized channel media content according to the address information of the personalized channel media content.
   In practice, the step of obtaining the corresponding personalized channel media content according to the address information of the personalized channel media content is:
   judging whether the address of the personalized channel media content is an address of the local device; if the address of the personalized channel media content is an address of the local device, obtaining the personalized channel media content from this device; if the address of the personalized channel media content is not an address of the local device, accessing the corresponding media content according to the address information of the personalized channel media content, and obtaining the corresponding personalized channel media content. The NE that implements the method herein may be a provider of the media content, or the NE can obtain the personalized channel media content from the actual provider of the media content on behalf of the client. After obtaining the personalized channel media content, the NE may buffer the media content, and transmit the media streams to the client, and this ensures smooth play of the media streams. Alternatively, the NE may buffer no media content, but forward the personalized channel media content to the client immediately after receiving the media content to ensure that media is transmitted in real time.
304. Transmit the personalized channel media content to the UE through the media channel.

At the time of playing the personalized channel media content, the NE establishes a transmission channel with the UE through signaling interactions. After receiving the content delivery instruction information, the NE judges whether the media content address carried in the content delivery instruction information is an address of the local device. If the media content address carried in the content delivery instruction information is an address of the local device, it indicates that the media content indicated by the content delivery instruction information is provided by this NE, and the NE obtains the corresponding media content from itself, and transmits the media content to the UE through the transmission channel established in step 301; if the media content address carried in the content delivery instruction information is not an address of the local device, it indicates that the media content indicated by the content delivery instruction information is provided by another NE such as a media server, and the NE accesses the media server according to the address information of the media content, obtains the corresponding media content, and transmits the media content to the UE through the transmission channel established in step 301. Therefore, at the time of playing the personalized channel media, although the media may be located at different locations of the network, the media content may be transmitted through the established transmission channel between the NE and the UE, and it is not necessary to establish the transmission channel between the UE and the media content before playing the media content. In this way, the transmission channel is established more quickly, the media content play can be switched between subchannels of the personalized channel quickly, and the user experience is improved.

When the media content indicated in the content delivery instruction information uses different transmission parameters, for example, when a higher bandwidth is required, or the media codec is different from that negotiated previously, the NE still does not need to modify or adjust the media channel established in step 301, but performs the corresponding media processing after obtaining the media content in step 303. For example, a higher compression ratio is applied to the media streams to reduce the required bandwidth, or a proper media coder is employed to transcode the media streams so that the media streams can be supported by the UE.

When the foregoing circumstance occurs, namely, when different transmission parameters are used for the media content indicated in the content delivery instruction information, the NE may modify and adjust the transmission parameters of the media channel through session modification such as bandwidth renegotiation and coding or decoding to ensure the media transmission in step 304. In this case, step 304 still uses the media channel established in step 301, but the relevant transmission parameters of this channel, for example, bandwidth information and codec information, have been adjusted and modified. In practice, the NE may send a SIP message such as a re-INVITE or UPDATE message to modify the SIP session. This message carries the media transmission parameters required by the personalized channel media content. By receiving the 200 OK response to such a message, the NE confirms the new media transmission parameters such as bandwidth information and codec information, and this ensures smooth progress of step 304. The adjustment of the media transmission channel parameters through SIP session modification is based on the prior art, and is not detailed herein.

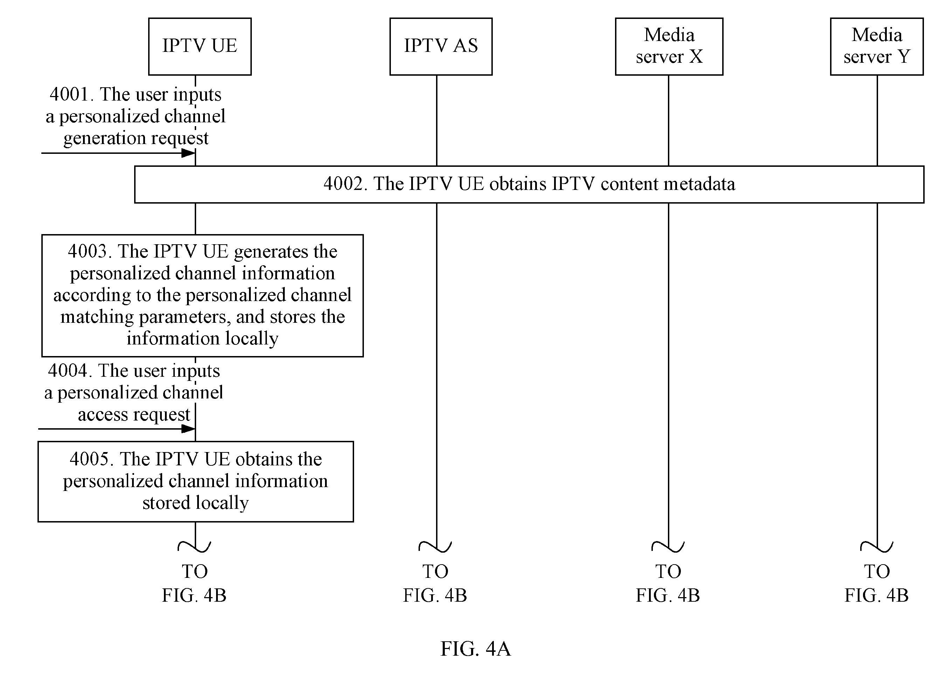

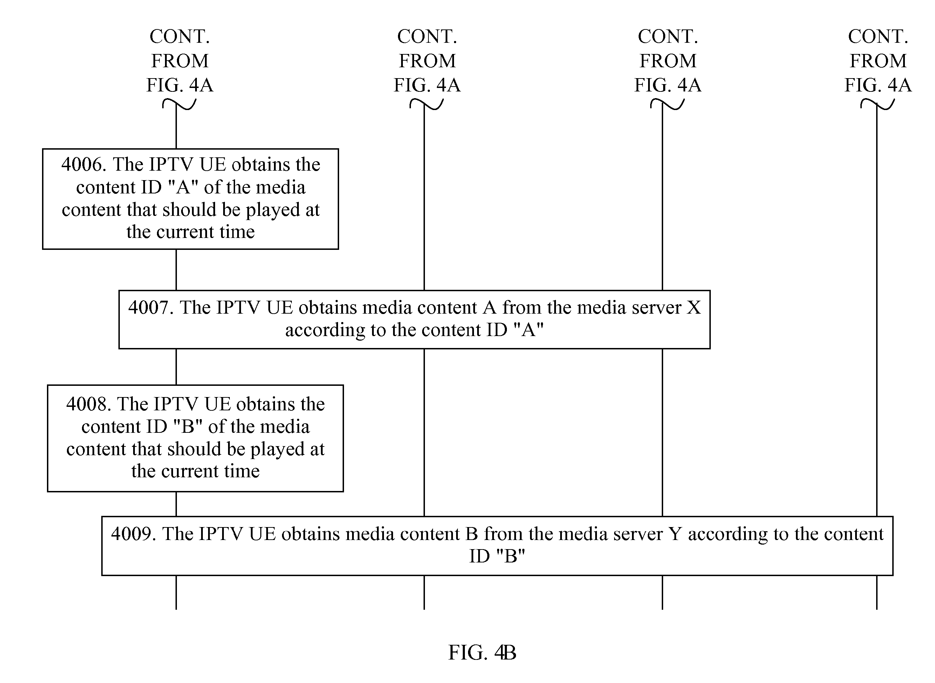

FIG. 4 is a flowchart of a personalized channel information generation method, an access control method, and a content delivery method according to a first embodiment of the present invention. The flowchart includes the following steps:
4001. The user inputs a personalized channel generation request. In practice, the user may press a key on the remote controller or use other input modes to send the request to the IPTV UE, thus triggering automatic generation of the personalized channel.
   When the user inputs the personalized channel generation request, the user may set the personalized channel matching parameters as required through the interactive operation with the IPTV UE, or modify the set personalized channel matching parameters. The detailed interaction mode may be: The UE provides some parameter setting options for the user, and the parameters are set through the interactive operation between the user and the UE.
4002. The IPTV UE obtains the IPTV content metadata from the network. In this process, the IPTV UE may obtain the IPTV content metadata from the media streams, or obtain an EPG from the EPG server, or use other modes to obtain the IPTV content metadata, thus knowing the description information about each program.
   The IPTV UE may store the obtained IPTV content metadata locally.
4003. The IPTV UE generates the personalized channel information according to the personalized channel matching parameters, and stores the information locally. The personalized channel matching parameters include: user data, or UE capabilities, or user states, or filter conditions, or any combination thereof, as described above. The IPTV UE performs sorting and matching for the obtained IPTV content metadata according to the preferences and characteristics of the user, and generates personalized channel information automatically. The information includes program A, program B, and other personalized content, and the time segments of playing each program. The IPTV UE in this embodiment may include a storing unit for storing the personalized channel information locally.
4004. The user inputs the personalized channel access request. In practice, the user may press a key to trigger access to the personalized channel. The user may click to enter this process when browsing the EPG or watching another program.
4005. After obtaining the personalized channel trigger request, the IPTV UE obtains the locally stored personalized channel information from the local storing unit. The information includes the user ID of program A, program B, and other personalized content, the personalized channel ID, and the time segments of play.
4006. The IPTV UE matches each time segment in the personalized channel information according to the current time, and obtains the content ID A of the content that should be played at the current time.
4007. The IPTV UE obtains the relevant media content from the media server X according to the content ID of program A.
   In step 4007, the IPTV UE may use a protocol such as SIP or the Real Time Streaming Protocol (RTSP) to request the address of the media server X from an IPTV Application Server (AS), and then the IPTV UE requests the relevant media content from the media server X; if the address obtained by the IPTV UE from the IPTV AS is a multicast address, the UE joins a multicast group through a protocol such as the Internet Group Management Protocol (IGMP) or Multicast Listener Discovery (MLD), thus receiving the media streams. In this case, the content delivery process is equivalent to: The IPTV UE sends the generated delivery instruction information to the media server to request the personalized channel media content. The content delivery instruction information may be described through an XML schema as described in step 203 above, and encapsulated in a SIP message, or a SIP INVITE message, or another protocol message that carries XML, and sent to the media server.
4008. The current program A finishes playing, and the IPTV UE determines the next program B to be played on demand according to the program schedule of the personalized channel, and obtains the content ID "B" of the content that should be played at the current time through matching.
4009. The IPTV UE obtains the relevant media content from the media server Y according to the content ID of program B.

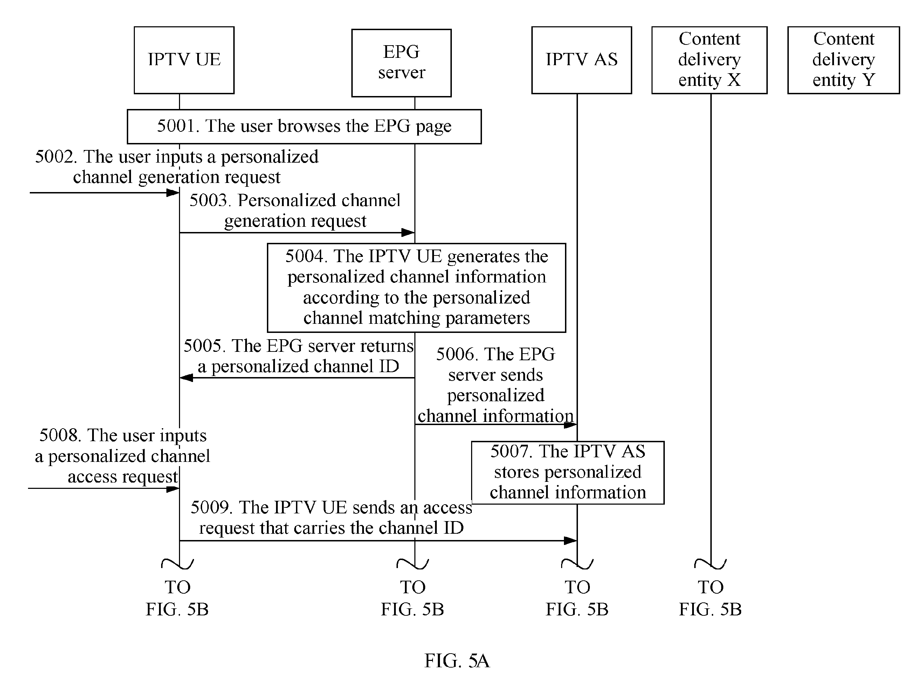

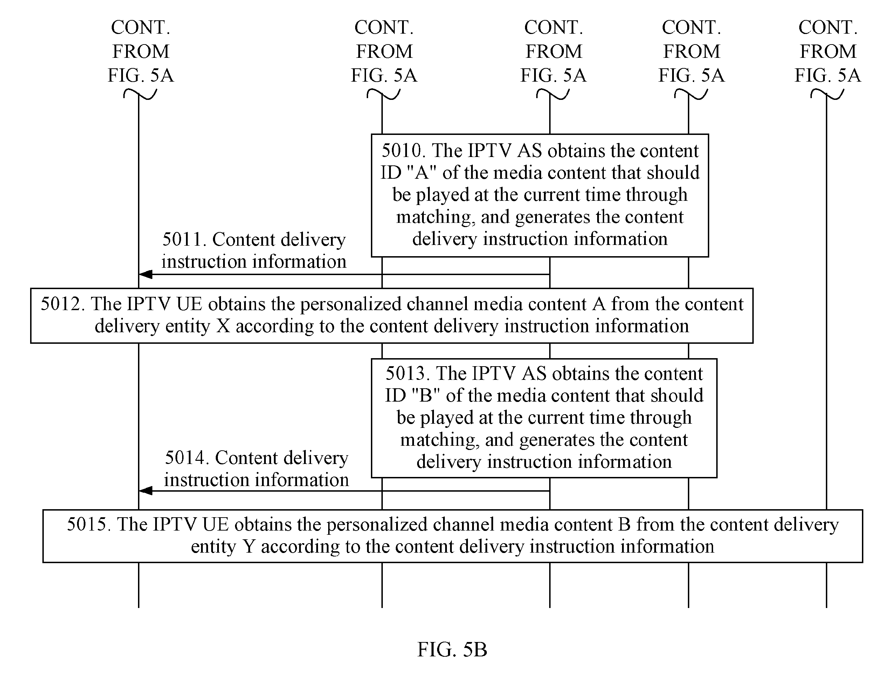

FIG. 5 is a flowchart of a personalized channel information generation method, an access control method, and a content delivery method according to a second embodiment of the present invention. The flowchart includes the following steps:
5001. The user obtains an EPG page, obtains a link for generating a personalized channel, and browses the EPG page.
5002. The user inputs a personalized channel generation request. In practice, the user may request the generating of the personalized channel information automatically by pressing a key on the remote controller or clicking a button on the screen.
5003. The IPTV UE sends a personalized channel generation request to the EPG server through a protocol such as HTTP or SOAP.
5004. The IPTV UE generates the personalized channel information according to the personalized channel matching parameters. The EPG server may use an entity such as a User Profile Service Function (UPSF) or an IPTV AS to obtain the matching parameters, and then match the EPG metadata, and thus a personalized channel is generated.
5005. The EPG server returns a response that carries the personalized channel ID to the IPTV UE.
5006. The EPG server sends the personalized channel ID to the IPTV AS at the same time.
5007. The IPTV AS saves the personalized channel ID as user configuration data.
5008. The user inputs a personalized channel access request. In practice, the user may select the desired personalized channel through a remote controller or another input device.
5009. The IPTV UE sends an access request that carries the personalized channel ID to the IPTV AS. This process may be implemented through a protocol such as SIP, HTTP, or RTSP. For example, a SIP INVITE message is sent, and the personalized channel ID is input into a Request-URI header field of the message.
5010. The IPTV AS obtains the personalized channel information from the local storing unit, obtains the specific program schedule according to the personalized channel ID in the access request, and matches the current content ID, and thus the content delivery instruction information is generated. In this embodiment, the information provision unit is a part of the IPTV AS. In practice, this unit may be another NE such as a UPSF, a Home Subscriber Server (HSS), a Content Profile Service Function (CPSF), or a Service Selection Function (SSF). The IPTV AS obtains the personalized channel information through a protocol such as Diameter or SOAP. In this step, the content delivery instruction may carry an access address of content A, for example, a unicast or multicast address. The content delivery instruction information may be described through an XML schema as described in step 203, or described in other modes.
5011. The IPTV AS sends the content delivery instruction information to the IPTV UE. When being sent, the content delivery instruction information may be carried in a notification message such as INFO, MESSAGE or NOTIFY, or carried in other messages such as 200 OK in response to the INVITE message.
5012. The IPTV UE obtains the personalized channel media content A from the content delivery entity X according to the obtained content delivery instruction information. In this process, if the access address of content A is a unicast address, the IPTV UE may create a unicast session with the content delivery entity X, for example, through RTSP, and obtain the media content from the specified unicast address; if the access address of content A is a multicast address, the IPTV UE may join the multicast group through IGMP or MLD, thus obtaining the multicast media content.
   Here the content delivery entity X and the content delivery entity Y may be providers of the media content, and are equivalent to a media server; they may also act as an agent, namely, after receiving the content delivery instruction information from the UE, they obtain the media content from the corresponding NE according to the indication (such as media content address information and content ID information) in the content delivery instruction information, and transmit the obtained media content to the IPTV UE.
5013. Upon completion of playing program A, the IPTV AS knows that the next program is upcoming, obtains the content ID "B" of the media content that should be played at the current time through matching, and generates content delivery instruction information. The content delivery instruction information may be described through an XML schema inclusive of an ItemSwitch element, as described in step 203, or described in other modes.
5014. The IPTV AS sends the content delivery instruction information of content B to the IPTV UE.
5015. The IPTV UE obtains the personalized channel media content B from the content delivery entity Y according to the obtained content delivery instruction information.

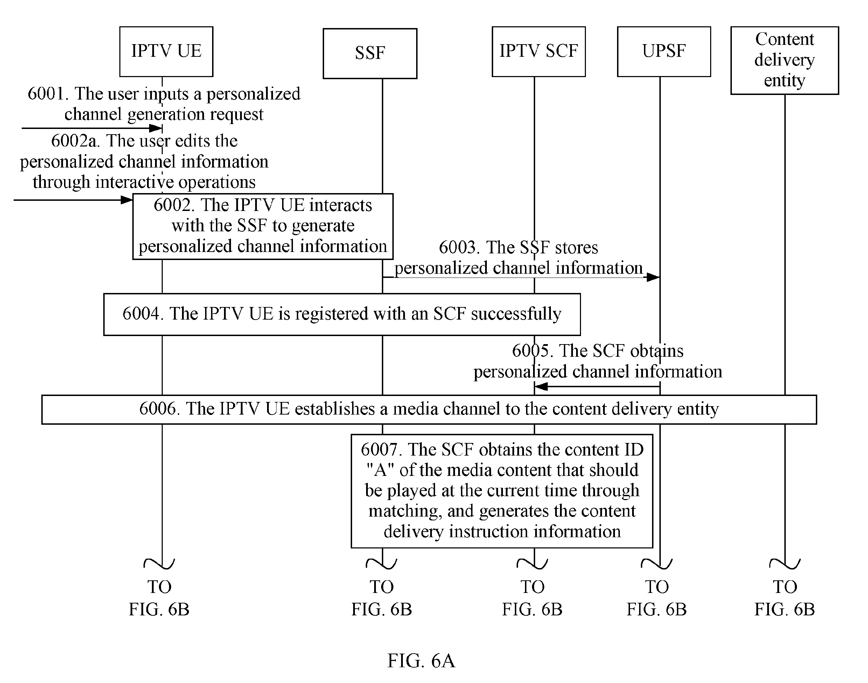

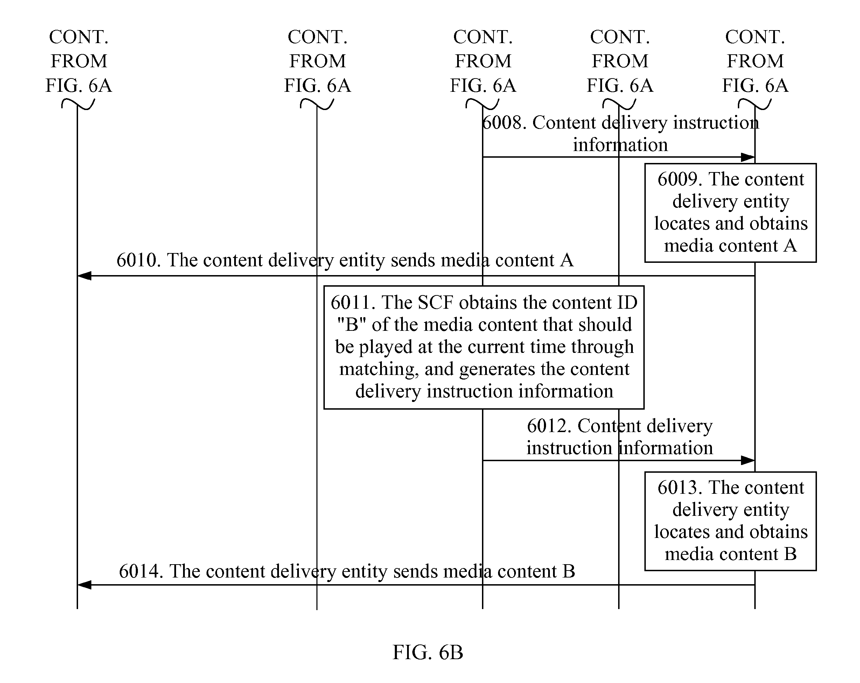

FIG. 6 is a flowchart of a personalized channel information generation method, an access control method, and a content delivery method according to a third embodiment of the present invention. The flowchart includes the following steps:
6001. The user inputs a personalized channel generation request. More specifically, the user may request the generating of a personalized channel through a remote controller or another input device while browsing the EPG.
6002a. The user edits the personalized channel information through interactive operations.
6002. At the same time as performing step 6002a, the user sets matching conditions, and adjusts the time of playing the program, and the UE requests the SSF to generate personalized channel information. In this process, the SSF may generate initial personalized channel information automatically first, and then the user edits the information; or the user sets conditions first, and then the SSF generates the personalized channel information.
6003. The SSF saves the generated personalized channel information as specific user configuration information into the UPSF.
6004. The UE is registered with an IPTV Service Control Function (SCF) successfully. This process is implemented through SIP REGISTER or in other modes.
6005. The SCF obtains the personalized channel information of the specific user after the UE is registered successfully. The personalized channel information carries the schedule of playing the content.
6006. The UE establishes a media channel to the content delivery entity for the purpose of transmitting the personalized channel media content. More specifically, the SCF sends the media address of the specified content delivery entity to the UE through SIP, and then media negotiation is performed between the UE and the content delivery entity through the Session Description Protocol (SDP). In this way, the parameters such as the sending port and receiving port of media are determined for the purpose of establishing the media channel.
6007. The SCF obtains the content ID "A" of the media content that should be played at the current time through matching, and generates the content delivery instruction information.
6008. The SCF sends the content delivery instruction information to the content delivery entity. The content delivery instruction information carries the receiving address of the media.
6009. The content delivery entity locates personalized channel media content A according to the received content delivery instruction information, and obtains media content A. If media content A needs to be obtained from another content delivery entity or media server, the content delivery entity needs to request the media content from the NE that provides media content A on behalf of the UE.
6010. The content delivery entity transmits content A to the IPTV UE through the media channel established in step 6006.
6011. Upon completion of playing content A, the SCF obtains the content ID "B" of the media content that should be played at the current time through matching, and generates content delivery instruction information.
6012. The SCF sends the content delivery instruction information of content B to the content delivery entity.
6013. The content delivery entity locates personalized channel media content B according to the received content delivery instruction information, and obtains media content B.
6014. The content delivery entity sends content B to the IPTV UE through the media channel. The media channel information includes the receiving address, port, and bandwidth parameters. Before this step, the content delivery entity may judge whether the media channel meets the transmission requirements of content B (for example, whether the bandwidth is enough, and whether the codec format is supported). If the media channel does not meet the transmission requirements, the content delivery entity may send a SIP session modification request such as a re-INVITE message or an UPDATE message, and renegotiate the relevant transmission parameters through SDP. The content delivery entity may send no session modification request, but transcode media content B obtained in step 6013 or convert the compression ratio so that the media can be transmitted on the media channel.

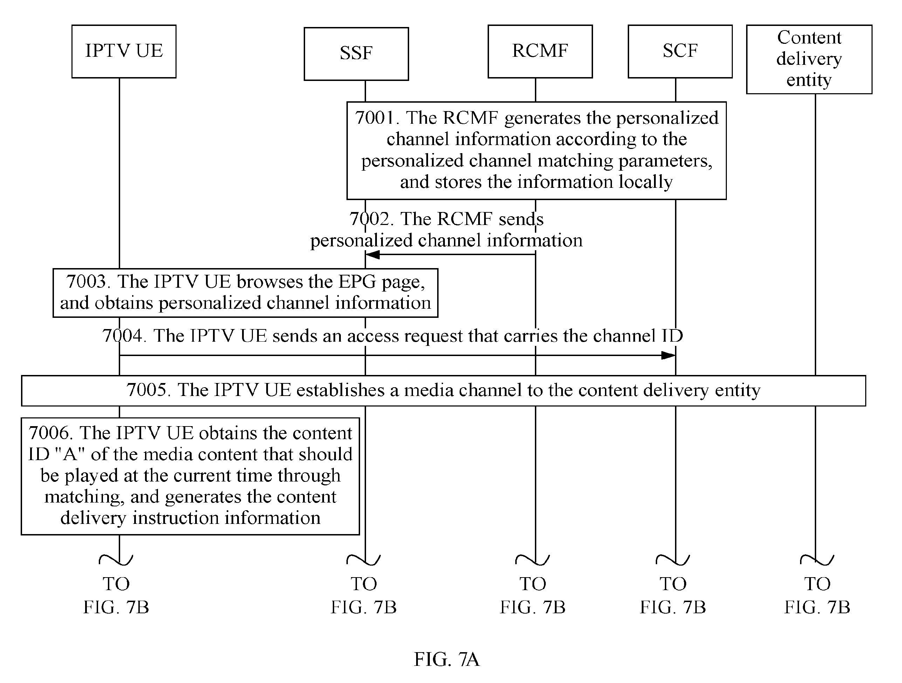

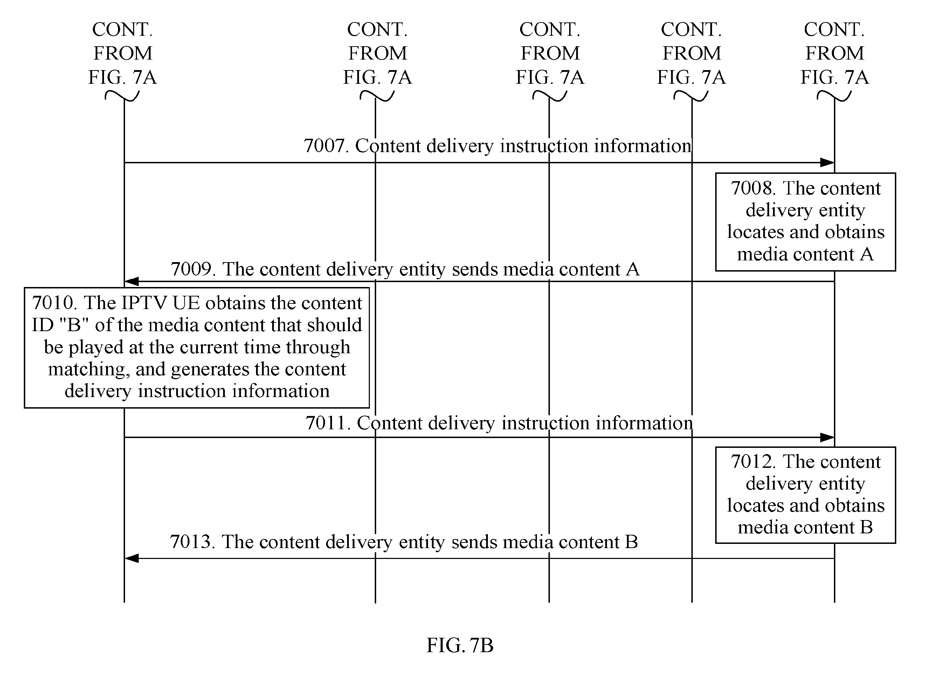

FIG. 7 is a flowchart of a personalized channel information generation method, an access control method, and a content delivery method according to a fourth embodiment of the present invention. The flowchart includes the following steps:
7001. A ReCoMmendation Function (RCMF) generates personalized channel information according to the personalized matching parameters, and stores the information locally. The personalized channel information may be generated by the RCMF automatically in a non-real-time mode.
7002. The RCMF sends the generated personalized channel information to the SSF through a protocol such as SOAP, SIP, and HTTP to generate a personalized EPG.
7003. The IPTV UE browses the EPG and obtains the personalized channel information. In this process, the user does not need to click any "Generate" button or link, and the EPG page displays the personalized channel automatically.
7004. The IPTV UE sends an access request that carries the channel ID to the SCF. The channel ID may be a personalized channel ID or a general IPTV content ID.
7005. The UE establishes a media channel to the content delivery entity for the purpose of transmitting the personalized channel media content.
7006. According to the current time and the obtained personalized channel information, the UE obtains personalized content ID "A" of the content to be played currently through matching, and generates the corresponding content delivery instruction information.
7007. The UE sends the content delivery instruction information to the content delivery entity. When being sent, the content delivery instruction information may be carried in a message such as an RTSP PLAY message or a SIP INVITE message. The message carries the delivery instruction information of personalized content A, for example, the access address of content A, time segment of playing content A, and rate of playing content A. Further, the content delivery instruction may carry an address of the UE, for example, an IP address and a port, or any other ID.
7008. The content delivery entity locates content A according to the content delivery instruction information, and obtains media content A. When the access address of content A is a unicast address, the content delivery entity requests to obtain the media content from the unicast address; when the access address of content A is a multicast address, the content delivery entity obtains media content A from a multicast group corresponding to the multicast address.
7009. The content delivery entity sends personalized channel media content A to the UE through the media channel established in step 7005. Media content A is sent through a protocol such as the Real-time Transfer Protocol (RTP).
7010. Upon completion of playing program A, the UE goes on to match the next program B, obtains the content ID "B" of the media content that should be played at the current time, and generates content delivery instruction information.
7011. The UE sends the content delivery instruction information of content B to the content delivery entity.
7012. The content delivery entity locates personalized channel media content B according to the received content delivery instruction information, and obtains media content B.
7013. The content delivery entity transmits content B to the IPTV UE through the media channel.

Unless otherwise specified, all SIP messages in the foregoing embodiments of the present invention pass through an IP Multimedia Subsystem (IMS) core, and in particular, pass through a Serving-Call Session Control Function (S-CSCF). Although the flowchart or the description above does not illustrate the IMS core or S-CSCF, the relevant SIP signaling passes through the S-CSCF actually.

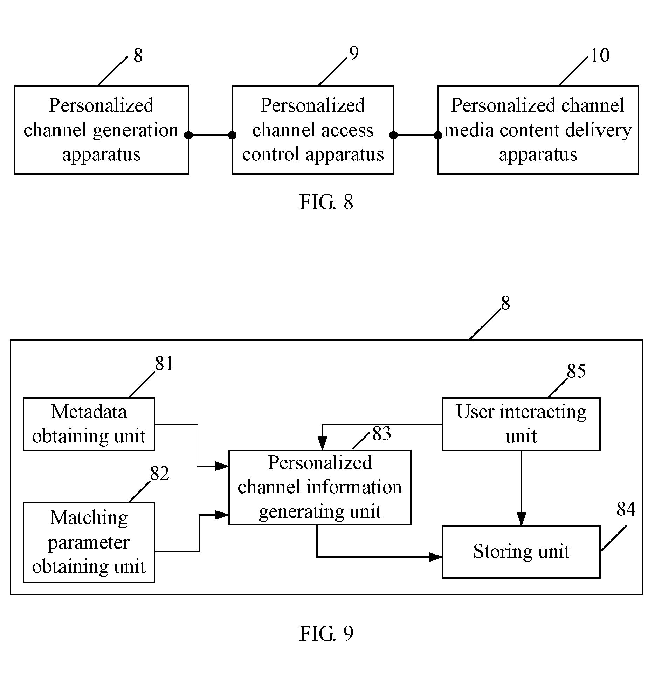

FIG. 8 shows an IPTV system according to an embodiment of the present invention. The system includes:
a personalized channel generation apparatus 8, configured to: obtain IPTV content metadata accessible to a user, obtain personalized channel matching parameters, and generate personalized channel information corresponding to the user according to the personalized channel matching parameters and the IPTV content metadata accessible to the user;
a personalized channel access control apparatus 9, configured to: obtain the personalized channel information generated by the personalized channel generation apparatus, generate, when a channel is accessed, content delivery instruction information according to the personalized channel information and current time, and access corresponding personalized channel media content according to the content delivery instruction information; and
a personalized channel media content delivery apparatus 10, configured to: receive personalized channel delivery instruction information that carries address information of the personalized channel media content, obtain the corresponding personalized channel media content according to the address information of the personalized channel media content, and transmit the personalized channel media content to a UE through a media channel established with the UE.

The personalized channel generation apparatus 8, the personalized channel access control apparatus 9, and the personalized channel media content delivery apparatus 10 will be detailed in the subsequent embodiments.

FIG. 9 shows a personalized channel generation apparatus according to an embodiment of the present invention. The personalized channel generation apparatus 8 includes the following units:
a metadata obtaining unit 81, configured to obtain IPTV content metadata accessible to the user, where the IPTV content metadata is IPTV content heading information, or play time information, or sorting information, or content ID information, or access address information, or keyword information, or any combination thereof;
a matching parameter obtaining unit 82, configured to obtain personalized channel matching parameters, where the personalized channel matching parameters have been described in the embodiment of the personalized channel information generation method above;
a personalized channel information generation unit 83, configured to generate personalized channel information corresponding to the user according to the personalized channel matching parameters and the IPTV content metadata accessible to the user, where the personalized channel information has been described in the embodiment of the personalized channel information generation method above;
a storing unit 84, configured to store the personalized channel information; and
a user interacting unit 85, configured to: receive an interactive operation command from the user, and edit the personalized channel information according to the interactive operation command.

In practice, the user expects to participate in the interactive operation to obtain personalized channel information more compliant with conditions. Therefore, a user interacting unit 85 may be added. This unit is configured to: receive an interactive operation command from the user, convert the command into the personalized channel matching parameters when necessary and generate the personalized channel information corresponding to this user.

If no storing unit 84 exists, the user interactive operation command is sent to the personalized channel information generation unit 83. According to the user interactive operation, the generation unit 83 performs adjustment before or after the personalized channel is generated automatically.

The adjustment after the personalized channel is generated automatically may be: An initial personalized channel is generated first, and then the user participates in the interactive operation to adjust and edit the program, for example, delete program A, or move program B from one time segment to another time segment.

The adjustment before the personalized channel is generated automatically may be: The user participates in the interactive operation and sets filter conditions according to preferences, and then a generation logic generates the personalized channel automatically. For example, the user may set certain time segments as unavailable before going on a business trip, or may add keywords to set favorite programs.

The two modes above may be combined. That is, filter conditions are set first, and then the channel information is generated automatically, and finally, the program is adjusted to meet the expectation of the user.

Further, the storing unit 84 may interact with the user interacting unit 85 directly or not. If the storing unit 84 interacts with the user interacting unit 85 directly, the interactive operation command received by the user interacting unit is sent to the storing unit 84, and then the generated personalized channel information is edited, for example, the time segment of playing the specific program is changed.

In practice, the personalized channel generation apparatus 8 may be stand-alone, or integrated in another NE such as the IPTV UE, IPTV SCF, IPTV SSF, server RCMF, or CPSF. The received IPTV content metadata information may come from the NE such as the CPSF, IPTV SCF, IPTV SSF, IPTV Management Function (MF), or IPTV UE; and the received matching parameters may come from the NE such as the SCF, SSF, UPSF, HSS, or UE; and the generated personalized channel information may be sent to the NE such as the UE, SCF, SSF, MF, HSS, or UPSF.

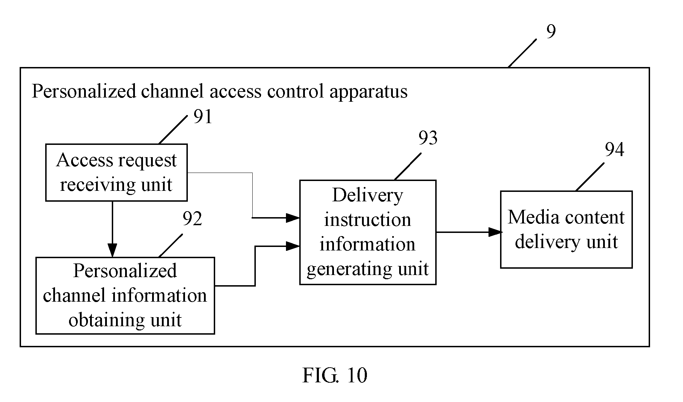

FIG. 10 shows a personalized channel access control apparatus according to an embodiment of the present invention. The personalized channel access control apparatus 9 includes the following units:
an access request receiving unit 91, configured to receive a personalized channel access request, and optional if the access to the personalized channel is triggered by an NE at preset system time automatically;
a personalized channel information obtaining unit 92, configured to obtain personalized channel information; and
a delivery instruction information generation unit 93, configured to generate, when a channel is accessed, content delivery instruction information according to personalized channel information and current system time.

When the user accesses the channel, the delivery instruction information generation unit 93 generates content delivery instruction information for multiple pieces of media content in the personalized channel according to the time sequence of playing the media content.

The content delivery instruction information carries address information of the personalized channel media content. The address information may be a multicast address or a unicast address of the media, an IP address and a port, or a routable URI.

The content delivery instruction information may further include:
codec information indicating the codec format applied to the personalized channel media content, for example, MPEG-4 or any other identifiable and usable codec format; or
segmental play information of the personalized channel media content, indicating that only one or more clips of the media content need to be played, for example, only the initial 10 minutes of the content; or
play rate information of the personalized channel media content, indicating whether the content is played normally, or played fast forward, or played slowly, or rewound, for example, playing the content fast forward at a 2.0× speed or rewinding the content at a -1.0 speed; or
content ID information of the personalized channel media content, identifying different content, for example, a CRID or any other URI; or
receiving address of the personalized channel media content, indicating the receiving location of the personalized channel accessing unit, for example, an IP address and a port, or any other routable URI; or
other content metadata of the personalized channel media content, displaying the director, sorting information, or price confirmed by the user; or
any combination thereof.

In this embodiment, the delivery instruction information generation unit 93 needs to cope with various possible circumstances, for example:

When the time segment allocated to a program is not enough for completing play of this program, the current program needs to be edited, split or accelerated properly, and the processing result is carried in the delivery instruction information sent to the accessing unit 94, and the accessing unit 94 accesses the corresponding personalized channel media content.

When an idle time segment exists between two programs or no program is allocated between them, special processing needs to be performed for the idle time segment. For example, a proper advertisement, or a clip of a new movie, or a small interactive game is inserted into the idle time segment. The processing result is carried in the delivery instruction information sent to the accessing unit 94, and the accessing unit 94 accesses the corresponding personalized channel media content. For example, if an advertisement is inserted into the idle time segment, the delivery instruction information may carry the content ID or access address of the advertisement; if a clip of a new movie is inserted into the idle time segment, the delivery instruction information may carry the clip of the movie; or, if an interactive game is inserted into the idle time segment, the delivery instruction information may carry the address for downloading the game.

For other possible exceptions, for example, an exception indicating that specific personalized channel content is no longer available, the system needs to solve the exception automatically according to its own logics, or the exception is carried in the delivery instruction information sent to the accessing unit 94, and the accessing unit 94 accesses the corresponding personalized channel media content. In practice, the personalized channel access control apparatus 9 may be stand-alone or integrated in another NE such as the IPTV UE, IPTV SCF, IPTV MF, Elementary Forward Function (EFF), Elementary Control Function (ECF), and media server.

The media content delivery unit 94 is configured to provide the corresponding personalized channel media content to the UE according to the content delivery instruction information.

In practice, the media content delivery unit 94 may provide the corresponding personalized channel media content to the UE according to the content delivery instruction information by means of: sending the content delivery instruction information to the UE, where the UE accesses the media content at an address corresponding to the address information of the personalized channel media content.

Or, the media content delivery unit 94 may provide the corresponding personalized channel media content to the UE according to the content delivery instruction information by means of: sending the content delivery instruction information to a media server, where the media server sends the corresponding media content to the UE.

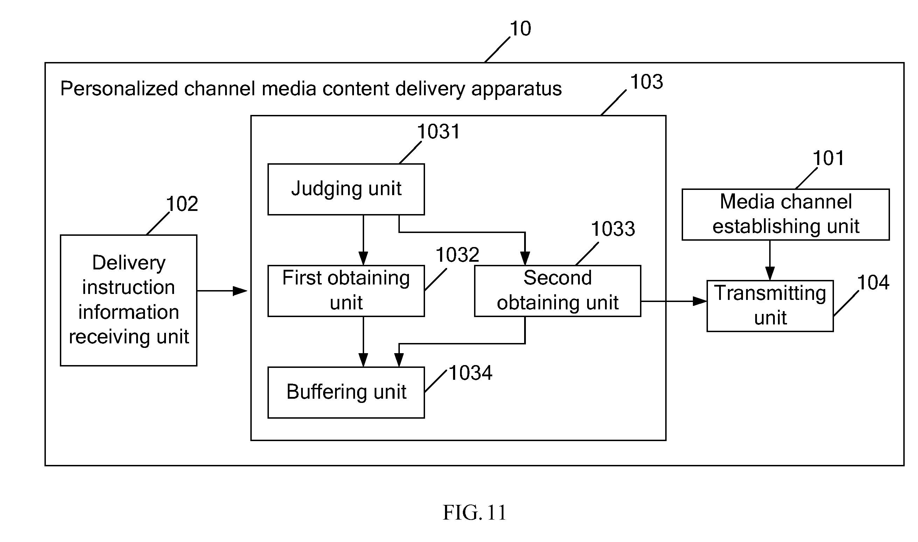

FIG. 11 shows a personalized channel media content delivery apparatus according to an embodiment of the present invention. The personalized channel media content delivery apparatus 10 includes the following units:
a media channel establishing unit 101, configured to establish a media channel to a UE for the purpose of transmitting the personalized channel media content;
a delivery instruction information receiving unit 102, configured to receive personalized channel delivery instruction information that carries address information of the personalized channel media content;
a personalized channel media content obtaining unit 103, configured to obtain the corresponding personalized channel media content according to the address information of the personalized channel media content; and
a transmitting unit 104, configured to transmit the personalized channel media content to the UE through the media channel.

The personalized channel media content obtaining unit 103 includes:
a judging unit 1031, configured to judge whether the address information of the personalized channel media content is an address of the local device;
a first obtaining unit 1032, configured to obtain the corresponding personalized channel media content from the local device if the judging unit determines that the address information of the personalized channel media content is the address of the local device;
a second obtaining unit 1033, configured to: access the corresponding media content according to the address information of the personalized channel media content if the judging unit determines that the address information of the personalized channel media content is not the address of the local device, and obtain the corresponding personalized channel media content; and
a buffering unit 1034, configured to buffer the obtained personalized channel media content;

In the embodiments of the present invention, the personalized channel matching parameters are obtained; and the personalized channel information corresponding to the user is generated according to the personalized channel matching parameters and the IPTV content metadata accessible to the user. In this way, the personalized channel information is generated automatically. In the embodiments of the present invention, personalized channel information may be obtained; when a channel is accessed, content delivery instruction information is generated according to the personalized channel information and the current time; and the corresponding personalized channel media content is accessed according to the content delivery instruction information, and the personalized channel media content corresponding to the current system time is obtained. In this way, the personalized channel is accessed. Further, in the embodiments of the present invention, a media channel is established with the UE for the purpose of transmitting personalized channel media content; content delivery instruction information is received; the corresponding personalized channel media content is obtained according to the address information of the personalized channel media content; and the personalized channel media content is transmitted to the UE through the media channel. In this way, the media content play can be switched between subchannels of the personalized channel quickly, and the user experience is improved. The embodiments of the present invention simplify the user operation, improve flexibility of channel access control, utilize resources fully, meet personalized requirements of the user, and improve user satisfaction.

The above descriptions are merely some exemplary embodiments of the present invention, but are not intended to limit the scope of the present invention. Any modifications, variations or replacement that can be easily derived by those skilled in the art without departing from the spirit and scope of the invention shall fall within the scope of the present invention.

## Claims

1. A personalized channel information generation method, **characterized by** comprising:
obtaining personalized channel matching parameters; and
generating personalized channel information corresponding to a user according to the personalized channel matching parameters and Internet Protocol Television, IPTV, content metadata accessible to the user.

2. The method according to claim 1, wherein before generating the personalized channel information corresponding to the user according to the personalized channel matching parameters and the IPTV content metadata accessible to the user, the method further comprises:
obtaining the IPTV content metadata accessible to the user.

3. The method according to claim 2, wherein after generating the personalized channel information corresponding to the user according to the personalized channel matching parameters and the IPTV content metadata accessible to the user, the method further comprises:
storing the personalized channel information.

4. The method according to claim 2 or 3, wherein after generating the personalized channel information corresponding to the user according to the personalized channel matching parameters and the IPTV content metadata accessible to the user, the method further comprises:
receiving an interactive operation command from the user, and editing the personalized channel information according to the interactive operation command.

5. The method according to claim 4, wherein:
the personalized channel matching parameters comprise: user data, or User Equipment, UE, capabilities, or user states, or filter conditions, or any combination thereof.

6. The method according to claim 5, wherein:
the user data comprises: IPTV subscription data of the user, or IPTV content preference data of the user, or user characteristic data, or any combination thereof.

7. The method according to claim 5, wherein:
the IPTV content metadata comprises: IPTV content heading information, or play time information, or sorting information, or content identifier, ID, information, or access address information, or keyword information, or any combination thereof.

8. The method according to claim 4, wherein:
the personalized channel information comprises: user identifier, ID, or personalized channel ID, or program schedule, or any combination thereof.

9. A personalized channel access control method, **characterized by** comprising:
obtaining personalized channel information;
generating, when a channel is accessed, content delivery instruction information according to the personalized channel information and current time; and
providing corresponding personalized channel media content to a User Equipment , UE, according to the content delivery instruction information.

10. The method according to claim 9, wherein before generating the content delivery instruction information according to the personalized channel information when the channel is accessed, the method further comprises:
receiving a personalized channel access request.

11. The method according to claim 9, wherein the step of providing the corresponding personalized channel media content to the UE according to the content delivery instruction information comprises:
sending the content delivery instruction information to the UE, wherein the UE accesses the media content at an address corresponding to the address information of the personalized channel media content.

12. The method according to claim 9, wherein the step of providing the corresponding personalized channel media content to the UE according to the content delivery instruction information comprises:
sending the content delivery instruction information to a media server, wherein the media server sends the corresponding media content to the UE.

13. The method according to claim 12, wherein the content delivery instruction information comprises:
codec information indicating a codec format applied to the personalized channel media content; or
segmental play information of the personalized channel media content; or
play rate information of the personalized channel media content; or
content identifier, ID, information of the personalized channel media content; or
receiving address information of the personalized channel media content; or
any combination thereof.

14. A personalized channel media content delivery method, **characterized by** comprising:
obtaining content delivery instruction information that carries address information of personalized channel media content;
obtaining the corresponding personalized channel media content according to the address information of the personalized channel media content; and
transmitting the personalized channel media content to a User Equipment, UE, through an established media channel.

15. The method according to claim 14, wherein before obtaining the content delivery instruction information, the method further comprises:
establishing the media channel with the UE for the purpose of transmitting the personalized channel media content.

16. The method according to claim 14, wherein the step of obtaining the corresponding personalized channel media content according to the address information of the personalized channel media content comprises:
judging whether an address of the personalized channel media content is an address of a local device; if the address of the personalized channel media content is the address of the local device, obtaining the personalized channel media content from the local device; if the address of the personalized channel media content is not the address of the local device, accessing the corresponding media content according to the address information of the personalized channel media content, and obtaining the corresponding personalized channel media content.

17. The method according to claim 16, wherein:
after accessing the corresponding media content and obtaining the corresponding personalized channel media content according to the address information of the personalized channel media content, and before transmitting the personalized channel media content to the UE through the established media channel, the method further comprises:
buffering the obtained personalized channel media content.

18. A personalized channel generation apparatus, **characterized by** comprising:
a metadata obtaining unit, configured to obtain Internet Protocol Television, IPTV, content metadata accessible to a user;
a matching parameter obtaining unit, configured to obtain personalized channel matching parameters; and
a personalized channel generation unit, configured to generate personalized channel information corresponding to the user according to the personalized channel matching parameters and the IPTV content metadata accessible to the user.

19. The apparatus according to claim 18, further comprising:
a storing unit, configured to store the personalized channel information.

20. The apparatus according to claim 18 or 19, further comprising:
a user interacting unit, configured to: receive an interactive operation command from the user, and edit the personalized channel information according to the interactive operation command.

21. The apparatus according to claim 20, wherein:
the personalized channel matching parameters comprise: user data, or User Equipment, UE, capabilities, or user states, or filter conditions, or any combination thereof.

22. The apparatus according to claim 21, wherein:
the user data comprises: IPTV subscription data of the user, or IPTV content preference data of the user, or user characteristic data, or any combination thereof.

23. The apparatus according to claim 21, wherein:
the IPTV content metadata comprises: IPTV content heading information, or play time information, or sorting information, or content identifier, ID, information, or access address information, or keyword information, or any combination thereof.

24. The apparatus according to claim 20, wherein:
the personalized channel information comprises: user identifier, ID, or personalized channel ID, or program schedule, or any combination thereof.

25. A personalized channel access control apparatus, **characterized by** comprising:
a personalized channel information obtaining unit, configured to obtain personalized channel information;
a delivery instruction information generation unit, configured to generate, when a channel is accessed, content delivery instruction information according to the personalized channel information and current time; and
a delivery unit, configured to provide corresponding personalized channel media content to a User Equipment, UE, according to the content delivery instruction information.

26. The apparatus according to claim 25, further comprising:
a receiving unit, configured to receive a personalized channel access request.

27. The apparatus according to claim 25, wherein:
when the channel is accessed, the delivery instruction information generation unit is configured to generate the content delivery instruction information for multiple pieces of media content in the personalized channel according to time sequence of playing the media content.

28. A personalized channel media content delivery apparatus, **characterized by** comprising:
a media channel establishing unit, configured to establish a media channel to a User Equipment ,UE, for the purpose of transmitting personalized channel media content;
a delivery instruction information receiving unit, configured to receive personalized channel delivery instruction information that carries address information of the personalized channel media content;
a personalized channel media content obtaining unit, configured to obtain the corresponding personalized channel media content according to the address information of the personalized channel media content; and
a transmitting unit, configured to transmit the personalized channel media content to the UE through the media channel.

29. The apparatus according to claim 28, wherein the personalized channel media content obtaining unit comprises:
a judging unit, configured to judge whether the address information of the personalized channel media content is an address of a local device;
a first obtaining unit, configured to obtain the corresponding personalized channel media content from the local device if the judging unit determines that the address information of the personalized channel media content is the address of the local device; and
a second obtaining unit, configured to: access the corresponding media content according to the address information of the personalized channel media content if the judging unit determines that the address information of the personalized channel media content is not the address of the local device, and obtain the corresponding personalized channel media content.

30. The apparatus according to claim 28, further comprising:
a buffering unit, configured to buffer the obtained personalized channel media content.

31. An Internet Protocol Television, IPTV, system, **characterized by** comprising:
a personalized channel generation apparatus, configured to: obtain IPTV content metadata accessible to a user, obtain personalized channel matching parameters, and generate personalized channel information corresponding to the user according to the personalized channel matching parameters and the IPTV content metadata accessible to the user;
a personalized channel access control apparatus, configured to: obtain the personalized channel information generated by the personalized channel generation apparatus, generate, when a channel is accessed, content delivery instruction information according to the personalized channel information and current time, and access corresponding personalized channel media content according to the content delivery instruction information; and
a personalized channel media content delivery apparatus, configured to: receive personalized channel delivery instruction information that carries address information of the personalized channel media content, obtain the corresponding personalized channel media content according to the address information of the personalized channel media content, and transmit the personalized channel media content to a User Equipment, UE, through a media channel established with the UE.

32. The system according to claim 31, wherein the personalized channel generation apparatus comprises:
a metadata obtaining unit, configured to obtain the IPTV content metadata accessible to the user;
a matching parameter obtaining unit, configured to obtain the personalized channel matching parameters;
a personalized channel generation unit, configured to generate the personalized channel information corresponding to the user according to the personalized channel matching parameters and the IPTV content metadata accessible to the user;
a storing unit, configured to store the personalized channel information; and
a user interacting unit, configured to: receive an interactive operation command from the user, and edit the personalized channel information according to the interactive operation command.

33. The system according to claim 31, wherein the personalized channel access control apparatus comprises:
a receiving unit, configured to receive a personalized channel access request;
a personalized channel information obtaining unit, configured to obtain the personalized channel information;
a delivery instruction information generation unit, configured to generate the content delivery instruction information according to the personalized channel information and the current time when the channel is accessed; and
a delivery unit, configured to provide the corresponding personalized channel media content to the UE according to the content delivery instruction information.

34. The system according to claim 31, wherein the personalized channel media content delivery apparatus comprises:
a media channel establishing unit, configured to establish the media channel with the UE for the purpose of transmitting the personalized channel media content;
a delivery instruction information receiving unit, configured to receive the personalized channel delivery instruction information that carries the address information of the personalized channel media content;
a personalized channel media content obtaining unit, configured to obtain the corresponding personalized channel media content according to the address information of the personalized channel media content; and
a transmitting unit, configured to transmit the personalized channel media content to the UE through the media channel.
